# EUROPÄISCHE PATENTSCHRIFT

(11) **EP 0 591 630 B1**
(45) Veröffentlichungstag und Bekanntmachung des Hinweises auf die Patenterteilung: **08.10.1997**
(21) Anmeldenummer: 93111142.1
(22) Anmeldetag: 12.07.1993
(51) Int. Cl.: B09B 1/00

(54) **Verfahren zur Gewinnung von Deponieraum durch Müllstopfverdichtung**
Method for saving place in a dump by compacting waste by tamping
Procédé pour gagner de la place dans une décharge par compactage des déchets par bourrage

(30) Priorität: 09.10.1992 DE 4234112
(43) Veröffentlichungstag der Anmeldung: 13.04.1994
(73) Patentinhaber: KELLER GRUNDBAU GmbH, D-63067 Offenbach (DE)
(72) Erfinder: Esters, Klaus, Dipl.-Ing., D-45219 Essen (DE); Raabe, Ernst-Werner, Dr.-Ing., D-44227 Dortmund (DE)
(74) Vertreter: Zeitler & Dickel

(56) Entgegenhaltungen:
- WO-A-92/04137
- DE-A- 3 511 556
- GB-A- 2 075 089
- US-A- 3 675 428
- US-A- 3 835 652
- PROSPEKT 10-2D: 'TIEFENRÜTTELVERFAHREN KELLER GRUNDBAU GMBH August 1991

## Beschreibung

Die Erfindung betrifft ein Verfahren zur Gewinnung von Deponieraum gemäß dem Oberbegriff des Anspruchs 1.

Unter Deponien im Sinne der Erfindung werden sämtliche möglichen Ablagerungen bzw. Aufschüttungen oder Auffüllungen von Abfallstoffen verstanden, wobei derartige Deponien sowohl als Aufschüttungen wie auch als Verfüllungen von Auskiesungen, Tagebauen usw. angelegt und betrieben sein können.

Der grundsätzlich knappe Deponieraum verlangt einen maximalen Nutzungsgrad. Dies bedeutet, daß ein größtmögliches Deponievolumen bei kleinster in Anspruch genommener Fläche zur Verfügung stehen soll.

Je nach Alter, Aufbau und Schütthöhe einer Deponie ist jedoch deren Verdichtungsgrad sehr unterschiedlich. Dies bedeutet, daß auch die Nutzung des zur Verfügung stehenden Deponieraumes unterschiedlich gut bzw. schlecht ist. Wenn die Deponie als Verfüllung einer Tallage und/oder eines früheren Aushub- bzw. Auskiesungsgeländes oder als Hangschüttung betrieben worden ist, ist in den seltensten Fällen noch eine zusätzliche Verdichtungsarbeit aufgewendet worden, um den Deponieraum mittels dichtestmöglicher Lagerung der Abfallstoffe optimal auszunutzen.

Aber auch bei über Tage im Aufschüttverfahren angelegten Deponien entstehen selbst bei planmäßiger permanenter Verdichtung des jeweiligen Schütthorizontes mit wachsender Deponiehöhe in den unteren Bereichen Hohlräume, insbesondere aufgrund des Abbaus der organischen Substanzen mit nachfolgender Ausgasung und Absetzen der verbleibenden Materialien.

Angesichts des immer knapper werdenden Deponieraums und der hierfür aufzuwendenden steigenden Kosten wird es daher in Verbindung mit dem gewachsenen Bewußtsein für einzuhaltende Umweltschutzbedingungen als wesentliche Aufgabe angesehen, den schon in Anspruch genommenen Deponieraum optimal zu nutzen.

Zu diesem Zweck ist es schon bekannt, das Volumen von in Betrieb befindlichen oder schon geschlossenen Deponien bereichsweise nachzuverdichten. Dies erfolgt bei einem bekannten Verfahren dadurch, daß im oberflächennahen Bereich der Deponie eine Nachverdichtung mittels der sog. dynamischen Intensivverdichtung durchgeführt wird, die sich jedoch maximal bis in eine Tiefe von ca. 8 m auswirkt. Dieses bekannte Verfahren besteht darin, daß an Trägergeräten ein Fallgewicht von 10 - 20 t hochgezogen und dann aus Fallhöhen von bis zu 20 m fallengelassen wird. Durch die Aufprallenergie werden die oberen Bodenschichten der Deponie zusammengepreßt. Es entstehen hierbei Trichter, die dann mit Müll aufgefüllt werden können. Durch ein entsprechend Fallpunktraster sowie durch mehrfaches Wiederholen des Fallvorganges, d.h. mittels mehrfacher Durchgänge für die Fallgewichte, kann eine relativ gute zusätzliche Verdichtung und damit Ausnutzung des zur Verfügung stehenden Deponievolumens erreicht werden. Dies gilt jedoch, wie schon erwähnt, lediglich im oberflächennahen Deponiebereich bis in eine Tiefe von ca. 8 m, und zwar in Abhängigkeit von der Art des jeweiligen Schüttgutes, mit dem die Deponie ursprünglich angelegt bzw. aufgefüllt wurde.

Es hat sich jedoch gezeigt, daß dieses bekannte Verfahren noch nicht sämtlichen Anforderungen an die wünschenswerte optimale Nutzung des vorhandenen Deponieraumes genügt. Dies beruht darauf, daß bei noch in Betrieb bzw. in der letzten Betriebsphase befindlichen Deponien sowie bei zur Schließung anstehenden oder schon geschlossenen Deponien gerade in den tieferen Deponiebereichen, d.h. im Bereich von etwa 10 - 30 m und mehr, erfahrungsgemäß erheblich große Hohlraumanteile vorhanden sind. Diese zeigen sich insbesondere beim Erreichen des maximal zugelassenen Deponievolumens und beruhen u.a. aufgrund der unzureichenden Wirksamkeit des beschriebenen bekannten Verdichtungsverfahrens und/oder auf dem zeitlichen Verlauf der Umwandlung von im Müll enthaltenen organischen Substanzen usw.

Insbesondere bei vorhandenen Altkubaturen ist davon auszugehen, daß in diesen erhebliche Anteile von Hohlräumen, Freiräumen und Porenräumen vorhanden sind. Diese bedeuten, daß der betreffende Deponieraum nicht als optimal genutzt anzusehen ist.

Ausgehend hiervon liegt der Erfindung die Aufgabe zugrunde, ein Verfahren zur Gewinnung von Deponieraum zu schaffen, das es ermöglicht, bereits bestehende Deponien auch noch nachträglich mit zusätzlichem Müll, insbesondere Hausmüll, zu verfüllen, ohne die für die betreffende Deponie gültigen Auflagen hinsichtlich deren äußerer Abmessungen zu verletzen.

Diese Aufgabe wird durch die Erfindung mit dem in Anspruch 1 beschriebenen Verfahren gelöst. Vorteilhafte Ausgestaltungen hiervon sind in den weiteren Ansprüchen angegeben.

Der Erfindung liegt der wesentliche Gedanke zugrunde, den in bestehenden Deponien vorhandenen erheblichen Anteil an Hohlräumen, Freiräumen, Porenräumen usw. als ein solches Deponievolumen anzusehen, das noch zur Aufnahme von zusätzlichem Müll zur Verfügung steht. Zu diesem Zweck wird erfindungsgemäß ein Nachverdichten des Deponievolumens in Form eines Tiefenverdichtens durchgeführt, indem mittels eines Tiefenstopfgerätes Stopfsäulen im Deponiekörper gebildet werden, die wenigstens überwiegend, vorzugsweise vollständig, aus Müll, insbesondere aus Hausmüll, bestehen.

Dadurch ist es auf überraschende Weise möglich, mittels dieses erfindungsgemäßen "Müllstopfverfahrens" eine bereits bestehende Deponie mit zusätzlichem Müll zu verfüllen und dadurch deren Deponieraum optimal auszunutzen. Es hat sich gezeigt, daß eine bestehende Deponie bei Anwendung des erfindungsgemäßen Verfahrens noch wenigstens 10 - 15 % zusätzliches Müllvolumen aufnehmen kann.

Das erfindungsgemäß durchzuführende Tiefenverdichten erfolgt vorzugsweise auf dynamische Weise mittels Schwingungs- und/oder Schlagenergie. Jedoch ist es selbstverständlich auch denkbar, eine entsprechende statische Energie, beispielsweise mittels eines in einem Rohr geführten statischen Gewichtes, anzuwenden, um das erfindungsgemäß vorgesehene Tiefenverdichten zu erreichen.

Im einzelnen kann das erfindungsgemäße Tiefenverdichten bzw. Müllstopfen somit mittels einer Rammeinrichtung oder dgl. durchgeführt werden, erfolgt vorzugsweise jedoch mittels eines Tiefenrüttlers. Ein derartiger Tiefenrüttler bzw. die hiermit auszuübenden Tiefenrüttelverfahren sind beisp. aus dem Prospekt 10 - 20 "Tiefenrüttelverfahren", August 1991, der Anmelderin bekannt.

Sofern eine Rammeinrichtung oder dgl. zur Anwendung gelangt, bestehen die zu diesem Zweck vorgesehenen einzelnen Verfahrensschritte gemäß der Erfindung darin, daß diese Rammeinrichtung, die insbesondere die Form eines Rohres oder eines sonstigen Hohlkörpers beliebigen Querschnittes mit einem lösbarem Verschlußteil am Rohrfuß aufweisen kann, von der Deponieoberfläche her in die Deponie bis zur geplanten Tiefe eingebracht wird, wobei der anstehende Müll verdrängt und bereits vorverdichtet wird. Sodann erfolgt die Zugabe von Müll, insbesondere bis in den Fußbereich des Rohres oder dgl., worauf dann das Rohr bei geöffnetem Rohrfuß abschnittweise gezogen wird, um einen bestimmten Volumenabschnitt des zugegebenen Mülls aus dem Rohrfuß austreten zu lassen. Daraufhin wird dann das Verdichten und Verstopfen des zugegebenen Mülls mittels eines im Rohr geführten Fallgewichtes durchgeführt, so daß ein verdichteter Körper in Form einer Müllstopfsäule entsteht.

Sofern bei einer erfindungsgemäßen Abwandlung des vorbeschriebenen Verfahrens die Anwendung statischer Energie zum Zweck des Verdichtens und Verstopfens des zugegebenen Mülls vorgesehen ist, gelangt anstelle des erwähnten Fallgewichtes ein im Rohr geführtes statisches Gewicht zur Anwendung. Letzteres kann gegebenenfalls über eine Aktiviereinrichtung, die an dem das Rohr oder dgl. führenden Traggerät vorgesehen ist, vergrößert werden.

Sofern demgegenüber, wie gemäß einer bevorzugten Ausführungsform der Erfindung vorgesehen, zum Tiefenverdichten ein Tiefenrüttler zur Anwendung gelangt, wird derart vorgegangen, daß zuerst ein Tiefenrüttler oder dgl. Vibrator von der Deponieoberfläche her in die Deponie bis zur geplanten Tiefe eingebracht wird. Hierbei wird der anstehende Müll verdrängt und bereits vorverdichtet. Sodann erfolgt das Ziehen des Rüttlers unter gleichzeitigem Müllstopfen von unten nach oben mittels Zugabe des Mülls von oben her, insbesondere in den Bereich der Rüttlerspitze, so daß dadurch ein verdichteter Körper in Form einer Müllstopfsäule ausgebildet wird.

Der Einfachheit halber wird die Erfindung im folgenden in Verbindung mit einem Tiefenrüttler beschrieben, obwohl, wie zuvor erwähnt, auch entsprechende andere geeignete Tiefenstopfgeräte zur Anwendung gelangen können, um das Ziel der Erfindung zu erreichen.

Die Verfahrensschritte des Einfahrens des Rüttlers sowie des Müllstopfens werden vorteilhafterweise im horizontalen Abstand zur vorher gebildeten Müllstopfsäule wiederholt. Zweckmäßigerweise werden hierbei die Müllstopfsäulen versetzt zueinander ausgebildet, um einen optimalen Verbund bzw. die bestmögliche Ausnutzung des Deponievolumens zu erreichen.

Entsprechend der Konsistenz einer vorhandenen Deponie kann das Müllstopfen in einem oder mehreren Verfahrensgängen erfolgen. Falls erwünscht, kann auch zur Erzielung eines großen Lochvolumens eine Bündelung von mehreren Rüttlern durchgeführt werden.

Der zum Einbau vorgesehene Müll kann vor seiner Zugabe aufbereitet werden. Zu diesem Zweck ist es möglich, den Müll bis auf eine bestimmte Teilchengröße oder Korngröße zu zerkleinern und/oder stückig zu pressen, z.B. zu brikettieren. Hierbei empfiehlt es sich, wenn der Müll für die Zugabe über eine am Rüttler angeordnete Schleuse oder über eine am Rüttler außen oder innen geführte Materialleitung vorgesehen ist, einen Korndurchmesser von nicht mehr als etwa 50 mm einzuhalten. Wenn demgegenüber der Müll zum unmittelbaren Einbau über den zwischen Rüttler und Bohrlochwand gebildeten Ringraum als Verfüllung von der Oberfläche her vorgesehen ist, sollte ein Korndurchmesser von bis zu 300 mm zweckmäßigerweise nicht überschritten werden.

Wie schon dargelegt, erfolgt der Einbau des Mülls derart, daß der Rüttler bis in die vorgesehene Tiefe von der Deponieoberfläche her in die Deponie abgesenkt wird. Hierbei sollte die Rüttlerspitze zweckmäßigerweise bis maximal 3 m oberhalb der Deponiesohle abgesenkt werden, um eine unmittelbare oder mittelbare Beeinflussung der Sohlenabdichtung zu vermeiden.

Nach Erreichen der vorgesehenen Rüttlertiefe wird dann der zusätzliche Müll über das am Rüttler außen oder innen geführte Materialrohr zugegeben, wobei dieser Müll aufgrund der vom Rüttler bzw. der Rüttlerspitze abgestrahlten horizontalen dynamischen Energie seitlich sowie vertikal verdrängt und verdichtet wird.

Es liegt im Rahmen der Erfindung, daß dieser spezielle Verfahrensschritt des Müllstopfens mittels an sich bekannter Betriebsdatenmeß- und -registriergeräte kontrolliert sowie gesteuert wird.

Wenn der Müll der Rüttlerspitze nicht direkt über die am Rüttler geführte Materialleitung zugegeben, sondern demgegenüber mittelbar über den Bohrlochringraum in das freie Bohrloch eingeführt wird, kann der Rüttler jeweils teilweise oder vollständig aus dem Bohrloch herausgezogen und sodann wieder eingeführt werden, um dadurch den eingebauten Müll im Pilgerschrittverfahren vom Tiefsten bis zur Oberfläche hin zu verdichten.

Bei jeder bestehenden Deponie ist grundsätzlich die Gefahr der Entzündung der in der Deponie vorhandenen Gase, insbesondere Methan, Hexan usw., und damit der Explosion mit nachfolgendem Deponiebrand nicht auszuschließen, was auf dem Erreichen des Flammpunktes infolge der entstehenden starken Reibungswärme beim Stopfvorgang beruht. Diese Gefahr kann jedoch dadurch ausgeschaltet werden, daß erfindungsgemäß während des Müllstopfens eine Inertisierung durchgeführt wird. Dies erfolgt vorzugsweise durch Zugabe eines die Inertisierung bewirkenden Spülmediums, insbesondere Stickstoff in flüssigem oder gasförmigem Zustand. Ein derartiges Spülmedium dient gleichzeitig in vorteilhafter Weise als Transportmedium für den Einbaustrom des zu stopfenden Mülls. Die erforderliche Menge und Temperatur des Spülmediums, insbesondere des verwendeten Stickstoffgases, wird beispielsweise über eine Verdampferanlage von einem Flüssigstickstoffsilo entsprechend den jeweils gemessenen Sauerstoffanteilen im Bohrloch geregelt. Damit besteht nicht nur ein Höchstmaß an Sicherheit gegen Gasentzündungen und -explosionen, sondern es ist hierdurch auch möglich, bereits schwelende oder schon brennende Deponiebereiche in gleicher Art und Weise wie ungefährdete Deponiebereiche zum Müllstopfen zu nutzen, wobei lediglich gleichzeitig in erfindungsgemäßer Weise eine Inertisierung durchzuführen ist.

Es liegt im Rahmen der Erfindung, den Müll in biologisch und/oder chemisch vor- bzw. aufbereiteter Form in der Deponie zu verstopfen. Hierdurch ist es möglich, den biologischen Abbau der im Deponieraum enthaltenen Schadstoffe zu bewirken bzw. zu beschleunigen.

Die Erfahrung hat gezeigt, daß sich für das erfindungsgemäße Verfahren der beste Nutzungsgrad in Hausmülldeponien bei Rasterabständen zwischen 3 - 6 m für die Müllstopfpunkte erreichen läßt, wobei letztere vorzugsweise versetzt angeordnet werden. Da die verwendeten Rüttlergeräteeinheiten in der Regel selbstfahrend sind, ist in Abhängigkeit vom Aufnahmevolumen eines Müllstopfpunktes eine Verdichtung oder Erweiterung der Rastermaße ohne besondere Aufwendungen möglich.

Während der Durchführung des erfindungsgemäßen Verfahrens ist es schließlich auch möglich, gleichzeitig für eine gezielte und bessere Entgasung des Deponiekörpers, bezogen auf die jeweiligen Kubaturabschnitte, zu sorgen. Dies kann beispielsweise dadurch erfolgen, daß Gasdrainagen eingebaut werden, und zwar in Form von Schüttungen, bei denen Schotter oder ähnliches Material als Drainagematerial zur Anwendung gelangt, oder in Form von flexiblen, halbfesten oder festen Drainageschläuchen, -rohren oder dgl.

Die Erfindung wird im folgenden anhand der Zeichnung näher erläutert. Hierbei zeigen jeweils schematisch im vertikalen Schnitt:
- Fig. 1: das erfindungsgemäße Verfahren beim Einfahren eines Tiefenrüttlers in den Deponiekörper,
- Fig. 2: beim Ziehen des Rüttlers unter gleichzeitigem Müllstopfen,
- Fig. 3: gegen Ende des Verfahrens beim abschließenden Verfüllen von Müll und
- Fig. 4: nach Abschluß des Verfahrens bei der Durchführung von Endbearbeitungsvorgängen.

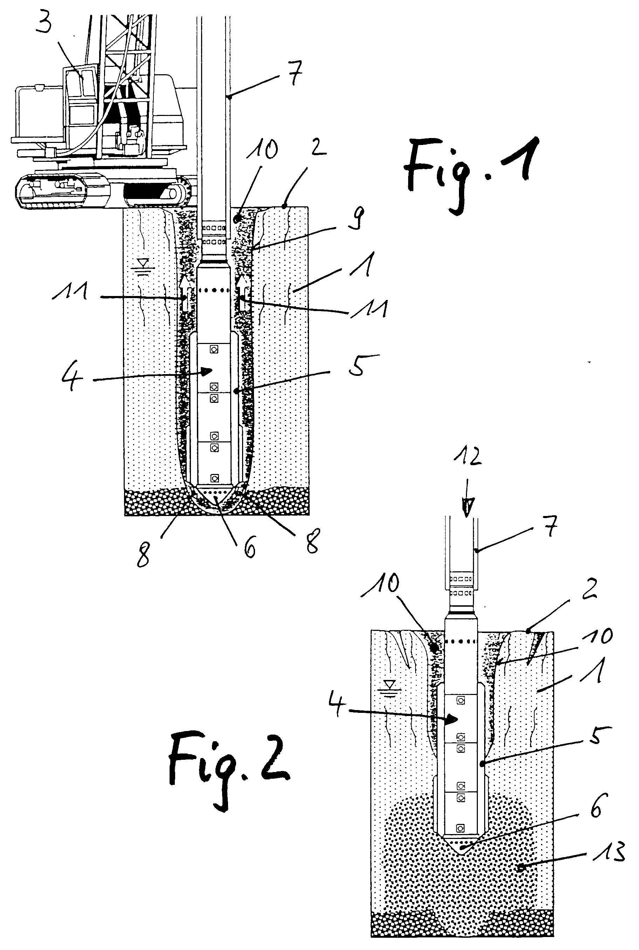

Das in der Zeichnung dargestellte Verfahren zur Gewinnung von Deponieraum wird, wie insbesondere aus Fig. 1 und 2 ersichtlich, derart durchgeführt, daß in einen Deponiekörper 1 von dessen Oberfläche 2 her ein an einem Tragegerät 3 geführter Tiefenrüttler 4 eingebracht und bis zur geplanten Tiefe abgesenkt wird. Der Tiefenrüttler 4 weist eine an sich bekannte Ausbildung auf. Er besitzt, wie aus der Zeichnung ersichtlich, im unteren Teil seiner zylindrischen Rüttlereinheit 5 kurz über der Rüttlerspitze 6 eine von einem starken Elektromotor angetriebene Unwucht. Diese bewirkt einen rotierenden Ausschlag der Rüttlereinheit 5 von erheblicher Energie. Der Rüttler 4 ist je nach Bedarf durch Aufsatzrohre 7 verlängert und, wie schon dargelegt, am Tragegerät 3 geführt.

Um den Einfahrvorgang des Rüttlers 4 zu unterstützen, wird ein Spülmedium 8, beispielsweise Stickstoffgas, zugegeben, das an der Rüttlerspitze 6 austritt und sodann das Bohrloch 9 über den zwischen dem Rüttler 4 und der Wand des Bohrlochs 9 gebildeten Ringraum 10 in Richtung der Pfeile 11 verläßt.

Nach Erreichen der Endtiefe der Rüttlerspitze 6 wird die Zugabe des Spülmediums 8 reduziert oder ganz eingestellt.

Wie aus Fig. 1 deutlich ersichtlich, wird bereits während des Einbringens des Tiefenrüttlers 4 in den Deponiekörper 1 der das Bohrloch 9 umgebende Müll verdrängt und vorverdichtet.

Wenn dann der Rüttler 4 die vorbestimmte Tiefe erreicht hat, erfolgt das Ziehen des Rüttlers 4 in der aus Fig. 2 ersichtlichen Weise. Hierbei wird gleichzeitig der Müllstopfvorgang durchgeführt, und zwar in Stufen von unten nach oben. Zu diesem Zweck wird Müll 12 in vorbereiteter bzw. aufbereiteter Form über eine im Rüttler 4 geführte, nicht näher dargestellte Materialleitung derart zugegeben, daß er im Bereich der Rüttlerspitze 6 austritt und dort allmählich während des Ziehens des Rüttlers 4 einen verdichteten Bodenzylinder 13 in Form einer ansteigenden Müllstopfsäule bildet. Diese Müllstopfsäule 13 kann einen Bodenzylinder von bis zu 5 m Durchmesser erfassen. Hierbei zeigt sich die fortschreitende Verdichtung in einer steigenden Stromaufnahme des Rüttlermotors.

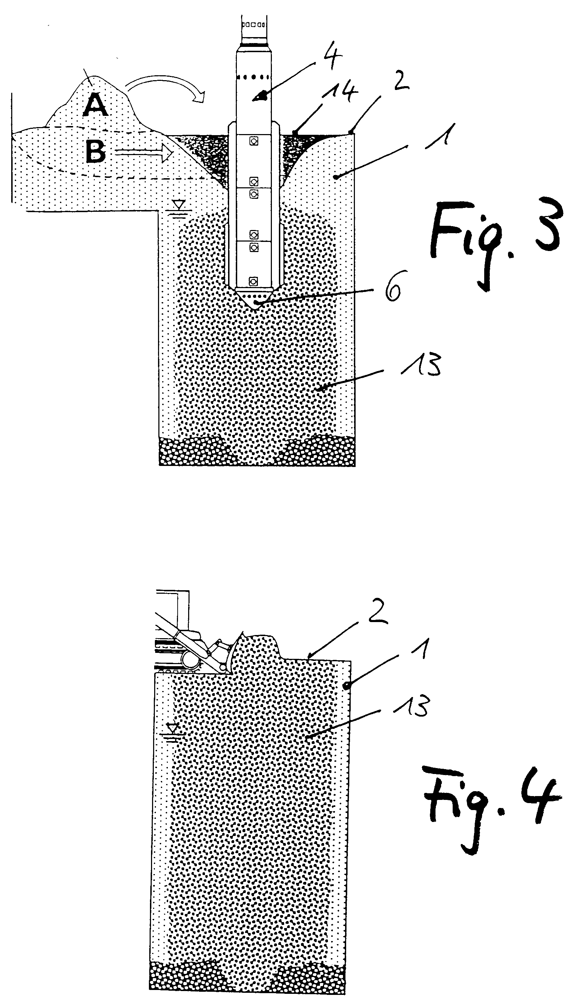

Wenn dann der Rüttler 4 fast vollständig gezogen worden ist, hat sich in der aus Fig. 3 ersichtlichen Weise eine entsprechende Müllstopfsäule 13 gebildet. Hierbei kann sich im Bereich des Bohrlochs 9 nahe der Deponieoberfläche 2 um den Rüttler 4 herum ein Absenktrichter 14 gebildet haben. Dieser wird zweckmäßigerweise mit angefahrenem Müll A oder mit bereits vorhandenem Müllmaterial B gefüllt. Bei diesem Vorgang kann wenigstens 10 - 15 % des verdrängten Volumens nachträglich zugegeben werden.

Nach Ausbildung einer einzelnen Müllstopfsäule 13 werden dann in horizontalem Abstand hierzu weitere Müllstopfsäulen 13, und zwar versetzt zur vorherigen Säule 13, ausgebildet, und zwar durch Wiederholen des zuvor beschriebenen Verfahrens. Hierbei können durch entsprechende Anordnung der Verdichtungszentren Deponiekörper 1 beliebigen Ausmaßes verdichtet werden. Nach dem durchgeführten Müllstopfvorgang mittels der beschriebenen Rüttelverdichtung wird die Deponieoberfläche 2 abgezogen und bei Wunsch mit einem Oberflächenrüttler oder mittels der bekannten dynamischen Intensivverdichtung nachbearbeitet.

## Patentansprüche

1. Verfahren zur Gewinnung von Deponieraum durch bereichsweise erfolgendes Nachverdichten des Deponievolumens,
**dadurch gekennzeichnet,**
daß das Nachverdichten des Deponievolumens in Form eines Tiefenverdichtens erfolgt, indem mittels eines Tiefenstopfgerätes (4) Stopfsäulen (13) im Deponiekörper (1) gebildet werden, die wenigstens überwiegend aus Müll (12), insbesondere aus Hausmüll, bestehen.

2. Verfahren nach Anspruch 1, dadurch gekennzeichnet, daß das Tiefenverdichten auf dynamische Weise mittels Schwingungs- und/oder Schlagenergie erfolgt.

3. Verfahren nach Anspruch 2, dadurch gekennzeichnet, daß das Müllstopfen mittels eines Tiefenrüttlers (4) durchgeführt wird.

4. Verfahren nach Anspruch 2, dadurch gekennzeichnet, daß das Müllstopfen mittels einer Rammeinrichtung oder dgl. durchgeführt wird.

5. Verfahren nach Anspruch 3, gekennzeichnet durch folgende Schritte:
a) Einbringen des Tiefenrüttlers (4) oder dgl. Vibrators von der Deponieoberfläche (2) her in die Deponie (1) bis zur geplanten Tiefe, wobei der anstehende Müll verdrängt und bereits vorverdichtet wird, und
b) Ziehen des Rüttlers (4) unter gleichzeitigem Müllstopfen von unten nach oben mittels von oben her erfolgender Zugabe des Mülls (12), insbesondere in den Bereich der Rüttlerspitze (6), so daß ein verdichteter Körper in Form einer Müllstopfsäule (13) ausgebildet wird.

6. Verfahren nach Anspruch 4, gekennzeichnet durch folgende Schritte:
a) Einbringen der Rammeinrichtung oder dgl., insbesondere in Form eines Rohres oder eines sonstigen Hohlkörpers beliebigen Querschnittes mit einem lösbaren Verschlußteil am Rohrfuß, von der Deponieoberfläche (2) her in die Deponie (1) bis zur geplanten Tiefe, wobei der anstehende Müll verdrängt und bereits vorverdichtet wird,
b) Zugabe von Müll (12), insbesondere bis in den Fußbereich des Rohres oder dgl., sowie abschnittweise erfolgendes Ziehen des Rohres bei geöffnetem Rohrfuß und
c) Verdichten und Verstopfen des zugegebenen Mülls (12) mittels eines im Rohr geführten Fallgewichtes, so daß ein verdichteter Körper in Form einer Müllstopfsäule (13) entsteht.

7. Verfahren nach Anspruch 6, dadurch gekennzeichnet, daß anstelle des Fallgewichtes ein im Rohr geführtes statisches Gewicht verwendet wird.

8. Verfahren nach einem der vorhergehenden Ansprüche, dadurch gekennzeichnet, daß die Verfahrensschritte des Einfahrens des Tiefenstopfgerätes (4) sowie des Müllstopfens im horizontalen Abstand zur vorher gebildeten Müllstopfsäule (13) wiederholt werden.

9. Verfahren nach Anspruch 8, daduch gekennzeichnet, daß die Müllstopfsäulen (13) versetzt zueinander ausgebildet werden.

10. Verfahren nach einem der vorhergehenden Ansprüche, dadurch gekennzeichnet, daß das Einfahren des Tiefenstopfgerätes (4) durch Zugabe eines Spülmediums (8), beispielsweise Gas und/oder Flüssigkeit, unterstützt wird.

11. Verfahren nach Anspruch 10, dadurch gekennzeichnet, daß die Zugabe des Spülmediums (8) nach Erreichen der Endtiefe des Tiefenstopfgerätes (4) reduziert bzw. beendet wird.

12. Verfahren nach einem der vorhergehenden Ansprüche, dadurch gekennzeichnet, daß das Müllstopfen kontinuierlich während des Ziehens des Tiefenstopfgeräts (4) durchgeführt wird.

13. Verfahren nach einem der Ansprüche 1 - 11, dadurch gekennzeichnet, daß das Müllstopfen diskontinuierlich bzw. in Stufen während des Ziehens des Tiefenstopfgeräts (4) durchgeführt wird.

14. Verfahren nach einem der vorhergehenden Ansprüche, dadurch gekennzeichnet, daß das Müllstopfen im Zusammenwirken mit dem Tiefenstopfgerät (4) im Pilgerschrittverfahren durchgeführt wird.

15. Verfahren nach einem der vorhergehenden Ansprüche, dadurch gekennzeichnet, daß der Müll (12) über den zwischen Tiefenstopfgerät (4) und Bohrlochwand gebildeten Ringraum (10) zugegeben wird.

16. Verfahren nach einem der Ansprüche 1 - 14, dadurch gekennzeichnet, daß der Müll (12) über eine am Tiefenstopfgerät (4) außen oder innen geführte Materialleitung zugegeben wird.

17. Verfahren nach einem der vorhergehenden Ansprüche, dadurch gekennzeichnet, daß der Müll (12) vor seiner Zugabe aufbereitet, insbesondere bis auf eine bestimmte Teilchengröße zerkleinert und/oder stückig gepreßt wird.

18. Verfahren nach einem der vorhergehenden Ansprüche, dadurch gekennzeichnet, daß während des Müllstopfens eine Inertisierung durchgeführt wird, indem ein die Inertisierung bewirkendes Spülmedium, insbesondere Stickstoff in flüssigem oder gasförmigem Zustand, hinzugegeben wird, wobei das Spülmedium gleichzeitig als Transportmedium für den Einbaustrom des zu stopfenden Mülls (12) dient.

19. Verfahren nach einem der vorhergehenden Ansprüche, dadurch gekennzeichnet, daß der Müll (12) in biologisch und/oder chemisch vor- bzw. aufbereiteter Form verstopft wird und hierdurch den biologischen Abbau der im Deponieraum (1) enthaltenen Schadstoffe bewirkt bzw. beschleunigt.

## Claims

1. Method of acquiring waste disposal space by effecting an area-by-area post-compaction of the disposed waste volume,
characterized in
that the post-compaction of the disposed waste volume is effected in the form of depth compaction by using a depth packing device (4) to form, in the body (1) of disposed waste, packed columns (13) consisting at least predominantly of waste (12), in particular household waste.

2. Method according to claim 1, characterized in that the depth compaction is effected in a dynamic manner by means of vibration and/or impact energy.

3. Method according to claim 2, characterized in that packing of the waste is effected by means of a depth vibrator (4).

4. Method according to claim 2, characterized in that packing of the waste is effected by means of a pile-driving device or the like.

5. Method according to claim 3, characterized by the following steps:
a) introduction of the depth vibrator (4) or the like from the surface (2) of the disposed waste into the disposed waste (1) to the planned depth, the waste being displaced and already pre-compacted, and
b) drawing of the vibrator (4), with simultaneous packing of the waste, from the bottom up by means of a feed of the waste (12) effected from above, particularly into the region of the vibrator point (6), so that a compacted body in the form of a packed waste column (13) is formed.

6. Method according to claim 4, characterized by the following steps:
a) introduction of the pile-driving device or the like, in particular in the form of a pipe or other hollow body of any desired cross section having a releasable closure part at the foot of the pipe, from the surface (2) of the disposed waste into the disposed waste (1) to the planned depth, the waste being displaced and already pre-compacted,
b) feeding of waste (12), in particular up to the region of the foot of the pipe or the like, as well as drawing of the pipe in sections with the foot of the pipe open, and
c) compaction and packing of the fed waste (12) by means of a drop weight guided in the pipe so that a compacted body in the form of a packed waste column (13) is produced.

7. Method according to claim 6, characterized in that, instead of the drop weight, a static weight guided in the pipe is used.

8. Method according to one of the preceding claims, characterized in that the method steps of introduction of the depth packing device (4) and packing of the waste are repeated at a horizontal distance from the previously formed packed waste column (13).

9. Method according to claim 8, characterized in that the packed waste columns (13) are formed offset relative to one another.

10. Method according to one of the preceding claims, characterized in that the introduction of the depth packing device (4) is assisted by feeding a flushing medium (8), e.g. a gas and/or liquid.

11. Method according to claim 10, characterized in that feed of the flushing medium (8) is reduced or terminated after attainment of the final depth of the depth packing device (4).

12. Method according to one of the preceding claims, characterized in that packing of the waste is effected continuously during drawing of the depth packing device (4).

13. Method according to one of claims 1 to 11, characterized in that packing of the waste is effected discontinuously or in stages during drawing of the depth packing device (4).

14. Method according to one of the preceding claims, characterized in that packing of the waste is effected in cooperation with the depth packing device (4) using a step-back technique.

15. Method according to one of the preceding claims, characterized in that the waste (12) is fed through the annular gap (10) formed between depth packing device (4) and borehole wall.

16. Method according to one of claims 1 to 14, characterized in that the waste (12) is fed through a material line externally or internally guided on the depth packing device (4).

17. Method according to one of the preceding claims, characterized in that the waste (12) prior to being fed is treated, being in particular crushed down to a specific particle size and/or pressed into lumps.

18. Method according to one of the preceding claims, characterized in that, during packing of the waste, an inert state is achieved by adding a flushing medium which produces an inert state, in particular nitrogen in a liquid or gaseous state, the flushing medium simultaneously serving as a transport medium for the encased flow of the waste (12) to be packed.

19. Method according to one of the preceding claims, characterized in that the waste (12) is packed in a biologically and/or chemically prepared and/or treated form and therefore effects and/or accelerates the biological degradation of the pollutants contained in the waste disposal site (1).

## Revendications

1. Procédé pour gagner de la place dans une décharge par compactage ultérieur du volume de la décharge, effectué par zones, caractérisé en ce que le compactage ultérieur du volume de la décharge est effectué sous forme d'un compactage en profondeur en formant au moyen d'un appareil de bourrage en profondeur (4) des colonnes de bourrage (13) dans le corps de la décharge (1), qui sont constituées au moins principalement par des déchets (12), en particulier par des déchets ménagers.

2. Procédé selon la revendication 1, caractérisé en ce que le compactage en profondeur est effectué de manière dynamique au moyen d'énergie vibrationnelle et/ou de chocs.

3. Procédé selon la revendication 2, caractérisé en ce que le bourrage des déchets est effectué au moyen d'un vibreur en profondeur.

4. Procédé selon la revendication 2, caractérisé en ce que le bourrage des déchets est effectué au moyen d'un dispositif de battage ou similaire.

5. Procédé selon la revendication 3, caractérisé par les étapes suivantes :
a) on introduit le vibreur en profondeur (4) ou un vibreur similaire depuis la surface de la décharge (2) dans la décharge (1) jusqu'à la profondeur visée, les déchets en présence étant refoulés et déjà préalablement compactés, et
b) on retire le vibreur (4) en bourrant simultanément les déchets depuis le bas vers le haut en y ajoutant par le haut des déchets (12), en particulier dans la zone de la pointe (6) du vibrateur, de sorte qu'on réalise un corps compacté sous forme d'une colonne de bourrage de déchets (13).

6. Procédé selon la revendication 4, caractérisé par les étapes suivantes :
a) on introduit le dispositif de battage ou similaire, en particulier sous la forme d'un tube ou d'un autre corps creux de section quelconque avec un élément de fermeture amovible dans le pied du tube, depuis la surface (2) dans la décharge jusqu'à la profondeur visée, les déchets en présence étant refoulés et déjà préalablement compactés,
b) on ajoute des déchets (12), en particulier jusque dans la région du pied ou similaire, et l'on retire par tronçon le tube, le pied du tube étant ouvert, et
c) on compacte et on bourre les déchets (12) ajoutés au moyen d'une masse tombante guidée dans le tube, de sorte qu'il se forme un corps compacté sous forme d'une colonne de bourrage de déchets (13).

7. Procédé selon la revendication 6, caractérisé en ce que l'on utilise un poids statique guidé dans le tube à la place d'une masse tombante.

8. Procédé selon l'une quelconque des revendications précédentes, caractérisé en ce que les étapes d'introduction de l'appareil de bourrage en profondeur (4) ainsi que de bourrage de déchets sont répétées à écartement horizontal par rapport à la colonne de bourrage de déchets (13) formée précédemment.

9. Procédé selon la revendication 8, caractérisé en ce que les colonnes de bourrage des déchets (13) sont réalisées en décalage les unes par rapport aux autres.

10. Procédé selon l'une quelconque des revendications précédentes, caractérisé en ce que l'introduction de l'appareil de bourrage en profondeur (4) est assisté en ajoutant un fluide de rinçage (8), par exemple du gaz et/ou un liquide.

11. Procédé selon la revendication 10, caractérisé en ce que l'addition du fluide de rinçage (8) est réduite ou terminée, respectivement, après avoir atteint la profondeur finale de l'appareil de bourrage en profondeur (4).

12. Procédé selon l'une quelconque des revendications précédentes, caractérisé en ce que le bourrage des déchets est effectué de manière continue pendant le retrait de l'appareil de bourrage en profondeur (4).

13. Procédé selon l'une quelconque des revendications 1 à 11, caractérisé en ce que le bourrage des déchets est effectué de manière discontinue ou par étapes pendant le retrait de l'appareil de bourrage en profondeur (4).

14. Procédé selon l'une quelconque des revendications précédentes, caractérisé en ce que le bourrage des déchets est effectué à pas de pélerin en coopération avec l'appareil de bourrage en profondeur (4).

15. Procédé selon l'une quelconque des revendications précédentes, caractérisé en ce que les déchets sont ajoutés par l'intermédiaire de la chambre annulaire formée entre l'appareil de bourrage en profondeur (4) et la paroi du trou de forage.

16. Procédé selon l'une quelconque des revendications 1 à 14, caractérisé en ce que les déchets (12) sont ajoutés par l'intermédiaire d'une conduite de matériau guidée à l'extérieur ou à l'intérieur de l'appareil de bourrage en profondeur (4).

17. Procédé selon l'une quelconque des revendications précédentes, caractérisé en ce que les déchets (12) sont traités avant leur addition, en particulier broyés jusqu'à une taille de particules déterminée et/ou pressés en morceaux.

18. Procédé selon l'une quelconque des revendications précédentes, caractérisé en ce que pendant le bourrage des déchets est effectuée une inertisation en ajoutant un fluide de rinçage provoquant l'inertisation, en particulier de l'azote à l'état liquide ou gazeux, le fluide de rinçage servant en même temps de fluide de transport pour le courant d'incorporation des déchets (12) à bourrer.

19. Procédé selon l'une quelconque des revendications précédentes, caractérisé en ce que les déchets (12) sont bourrés sous une forme préparée ou traitée biologiquement et/ou chimiquement, respectivement, ce qui provoque et accélère la dégradation biologique des matières polluantes contenues dans l'espace de la décharge (1).
